# EUROPÄISCHE PATENTANMELDUNG

(11) **EP 1 607 894 A1**
(43) Veröffentlichungstag der Anmeldung: **21.12.2005**
(21) Anmeldenummer: 05010719.2
(22) Anmeldetag: 18.05.2005
(51) Int. Cl.: G06F 17/60

(54) **Verfahren und System zur Ermittlung eines Wartungsbedarfs**

(30) Priorität: 15.06.2004 DE 102004028565
(71) Anmelder: ABB PATENT GmbH, 68526 Ladenburg (DE)
(72) Erfinder: Bader, Axel, Dipl.-Ing. (FH), 61169 Friedberg (DE); Hansen, Sven, 61200 Berstadt (DE); Schmidt, Steffen, 73434 Aalen (DE); Henrich, Kim, Dipl.-Ing. (FH), 63683 Gelnhaar (DE)
(74) Vertreter: Miller, Toivo

(57) **Zusammenfassung**

Die Erfindung betrifft ein Verfahren zur Ermittlung eines Wartungsbedarfes von Achsen eines Roboterarmes eines Industrieroboters, wobei die Daten eines Bewegungsablaufes an wenigstens einer Achse während wenigstens eines Arbeitszyklus des Industrieroboters zur Verfügung gestellt werden. Die Drehbewegungen der wenigstens einen Achse werden anhand der Daten festgestellt und durch eine Bewertung der festgestellten Drehbewegungen ein Wartungsintervall für die wenigstens eine Achse ermittelt. Zudem betrifft die Erfindung ein System zur Ermittlung eines Wartungsbedarfes.

## Beschreibung

Die Erfindung betrifft ein Verfahren und ein System zur Ermittlung eines Wartungsbedarfs von Achsen eines Roboterarmes eines Industrieroboters.

Es ist allgemein bekannt, dass Roboter in bestimmten Zeitabständen gewartet werden müssen. Für die beweglichen Teile des Roboters, wie zum Beispiel die Achsen und Getriebe des Roboterarmes, bedeutet dies, dass diese geschmiert werden oder das Getriebeöl ausgetauscht wird. Andere Bauteile eines Roboters, wie zum Beispiel Kabeleinheiten, die ebenfalls durch die Bewegung des Roboterarmes beansprucht werden, werden einer optischen oder elektrischen Kontrolle auf Verschleiß- und Bruchstellen unterzogen. Üblicherweise sind solche Wartungsmaßnahmen zu bestimmten Zeitpunkten während der zu erwarteten Lebenszeit des Roboters festgelegt, und nach einer bestimmten Anzahl von Betriebsstunden fällig oder unabhängig von irgendwelchen Betriebsstunden, nach einer bestimmten absoluten Zeitspanne.

Ausgehend vom vorgenannten Stand der Technik ist es die Aufgabe der Erfindung, ein Verfahren und ein System zur Ermittlung eines Wartungsbedarfs von Achsen eines Roboterarmes eines Industrieroboters anzugeben, mit dem auf möglichst einfache Weise eine Aussage über einen Wartungsbedarf von Achsen eines Roboterarmes eines Industrieroboters getroffen werden kann.

Diese Aufgabe wird gelöst durch das erfindungsgemäße Verfahren zur Ermittlung eines Wartungsbedarfes von Achsen eines Roboterarmes eines Industrieroboters mit den in Anspruch 1 angegebenen Merkmalen sowie mit dem erfindungsgemäßen System zur Ermittlung eines Wartungsbedarfes von Achsen eines Roboterarmes eines Industrieroboters mit den in Anspruch 9 angegebenen Merkmalen.

Demgemäss weist das erfindungsgemäße Verfahren zur Ermittlung eines Wartungsbedarfes von Achsen eines Roboterarmes eines Industrieroboters unterschiedliche Verfahrensschritte auf. Die Daten eines Bewegungsablaufes an wenigstens einer Achse während wenigstens eines Arbeitszyklus des Industrieroboters werden einer Ermittlung zugrunde gelegt. Die Drehbewegungen der wenigstens einen Achse werden anhand der Daten festgestellt. Schließlich wird durch die Bewertung der festgestellten Drehbewegung ein Wartungsintervall für'die wenigstens eine Achse ermittelt.

Auf diese Weise wird erreicht, dass ein Wartungsintervall als zeitliche Aussage über einen Wartungsbedarf unabhängig von absoluten Größen angebbar ist, wie zum Beispiel einem absoluten Zeitintervall, oder einer Betriebsstundenzahl, die in der Regel erhebliche Zeiten, ohne dass der Industrieroboter sämtliche Achsen bewegt, mit berücksichtigt. Nach dem erfindungsgemäßen Verfahren wird ein ermitteltes Wartungsintervall in der Regel erheblich verlängert im Vergleich zum seither üblichen, so dass der nächst folgende Wartungszeitpunkt deutlich später liegt als nach den seither bekannten Methoden.

Für das erfindungsgemäße Verfahren spielt es vorteilhafterweise keine Rolle, ob die Daten für den Bewegungsablauf gemessen oder aus einem Datenspeicher ausgelesen werden.

Als Arbeitszyklus wird die Abarbeitung verschiedener Befehle, die zur Ausführung einer dem Roboter gestellten Aufgabe notwendig sind, bezeichnet. Üblicherweise ist es vorgesehen, dass der Industrieroboter diesen so bezeichnete Arbeitszyklus immer wieder wiederholen muss. Auf diese Weise ist der Arbeitzyklus kennzeichnend für die verschiedenen Belastungen, die der Industrieroboter innerhalb seiner Aufgabenstellung zu leisten hat. Durch die Betrachtung einer Vielzahl von Arbeitszyklen für die Ermittlung eines Wartungsbedarfs erhöht sich bereits aus statistischen Gründen die Genauigkeit, also die Qualität der Aussage, die über das Wartungsintervall getroffen wird.

Es hat sich als vorteilhaft herausgestellt, dass die Bewertung nach Zeitanteilen einer Drehbewegung durchgeführt wird. Im Fall, dass eine Achse betrachtet wird, kann als Maßstab für die Bewertung beispielsweise ein Quotient zwischen dem Zeitraum, in der die betreffende Achse bewegt wurde, zu der gesamten Betriebszeit des Roboters gebildet werden. Entsprechend diesem Quotienten, gegebenenfalls mit einem empirischen Wert verknüpft, der das Wartungsintervall nochmals aufgrund empirischer Erkenntnisse beeinflusst, wird sich das Wartungsintervall insgesamt entsprechend verlängern.

Eine weitere vorteilhafte Möglichkeit die Bewertung durchzuführen, ist es, die Anzahl der vollführten Umdrehungen für eine bestimmte Roboterachse festzustellen. Dabei kann der Wert für die Anzahl der Umdrehungen durch die Angabe in Bruchteilen einer ganzen Zahl sehr genau festgestellt werden, da die Antriebsmotoren der Roboterachsen üblicherweise eine sehr genaue Drehwinkelansteuerung ihrer Schrittmotoren haben, so dass die Umdrehungsanzahl sehr genau messbar ist. Diese Bewertungsmethode wird insbesondere dann verwendet, wenn mehrere oder alle Achse des Industrieroboters beziehungsweise deren Bewegungsanteile zueinander verglichen werden, um zu einer für den Roboter einheitlichen Aussage über das zu erwartende Wartungsintervall zu kommen. Häufig ist es nämlich so, dass die Motoren und Antriebe sowie die Getriebe der einzelnen Achsen, auch wenn sie aufgrund unterschiedlicher Belastungen eine unterschiedliche Bauart aufweisen, für dieselbe Gesamtlebenszeit ausgelegt sind.

Eine vorteilhafte Weiterbildung des erfindungsgemäßen Verfahrens ist dadurch gekennzeichnet, dass unter Berücksichtigung des ermittelten Wartungsintervalls, zusammen mit der bisherigen Anzahl der Arbeitszyklen, ein Wartungszeitpunkt für die betreffende Achse oder ein gemeinsamer Wartungszeitpunkt für alle Achsen bestimmt wird.

Aus den Daten über die bisherige Anzahl der Arbeitszyklen seit der letzten Wartungsmaßnahme wird nach den allgemein bekannten Berechnungsmethoden der bereits verbrauchte Wartungszeitraum berechnet und auf diese Basis noch ein verbleibender Wartungszeitraum bestimmt, so dass der Zeitpunkt am Ende dieses verbleibenden Wartungszeitraumes als nächstfolgender Wartungszeitpunkt bestimmt wird.

In einer vorteilhaften Ausgestaltung des erfindungsgemäßen Verfahrens wird ein derartiger Zeitpunkt für alle Achsen bestimmt, so dass in der Regel verschiedene mögliche nächstfolgende Wartungszeitpunkte für die unterschiedlichen Achsen berechnet werden und im Anschluss an diese Berechnung eine Auswahl desjenigen Zeitpunktes erfolgt, der zeitlich gesehen am nächsten zum aktuellen Zeitpunkt liegt.

Insgesamt wird mit dem erfindungsgemäßen Verfahren erreicht, dass die ungleiche häufige Verteilung der Bewegungen einzelner Achsen erkannt wird und in einen Zusammenhang mit dem Produktionszyklus gestellt wird. Die Wartungszyklen werden entsprechend angepasst. Es liegt auch innerhalb des Erfindungsgedankens, dass auf der Grundlage der Bewegungsanteile der unterschiedlichen Achsen während eines Arbeitszyklus des Industrieroboters Empfehlungen berechnet werden, wie beispielsweise höher belastete Achsen, also Achsen mit einem erhöhten Bewegungsanteil, zukünftig geringer belastet werden können und bestimmte Bewegungsaufgaben von anderen, weniger belasteten Achsen des Industrieroboters übernommen werden können.

Die Aufgabe wird auch gelöst durch ein System zur Ermittlung eines Wartungsbedarfs von Achsen eines Roboterarmes eines Industrieroboters mit einem Datenmodul, welches die Daten eines Bewegungsablaufes wenigstens einer Achse während wenigstens eines Arbeitszyklus des Industrieroboters enthält, mit einem Analysemodul, mit welchem aus den Daten Drehbewegungen der wenigstens einen Achse analysierbar sind, und mit einem Bewertungsmodul, durch welches mittels einer Bewertung der festgestellten Drehbewegungen die Festlegung eines Wartungsintervalls für die wenigstens eine Achse ermöglicht ist.

Es werden also lediglich Daten eines Bewegungsablaufes der Achse oder der Achsen des Industrieroboters benötigt, die die Grundlage für die Ermittlung eines Wartungsbedarfes sind. Dabei spielt es keine Rolle, ob mit einem historischen Bestand an Daten gearbeitet wird oder die entsprechenden Daten gerade erzeugt werden, also online in das Datenmodul einlesbar sind. Durch das Analysemodul sind aus dem Datenbestand diejenigen Daten herausfilterbar welche die Drehbewegungen einer bestimmten Achse mehrerer oder auch aller Achsen des Industrieroboters angeben. Auch hier ist festzuhalten, dass es für das erfindungsgemäße System ohne Belang ist, ob diese Daten über den Bewegungsablauf als direkte oder indirekte Werte bereitgestellt sind. Als direkte Werte werden solche Werte bezeichnet, die den Bewegungsablauf selbst angeben, also zum Beispiel mit Bezug zum Betrieb eines Motors einer Roboterachse die Zeitdauer unmittelbar angibt oder eine Gradzahl für eine Motordrehung oder Achsdrehung unmittelbar angegeben ist. Als indirekte Werte sind solche Werte zu betrachten, die den Bewegungsablauf zwar beinhalten, jedoch zunächst durch Transformation in einen Wert für einen Bewegungsablauf umgewandelt werden müssen, beispielsweise einen Spannungswert, der als Betriebszeit interpretiert werden muss, oder Sparinungsimpulse, die gezählt werden müssen, wobei jeder Spannungsimpuls einer bestimmten Gradzahl an Drehbewegung entspricht.

Schließlich ist mit dem Bewertungsmodul die Festlegung eines Wartungsintervalls für eine, mehrere oder für alle Achsen ermöglicht.

Die Bewertung ist wie vorstehend bereits näher erläutert, sowohl unter einem zeitlichen Aspekt möglich, als auch unter einem numerischen Aspekt, also dem Zählen von Umdrehungen, die die wenigstens eine Achse vollführt.

Weitere vorteilhafte Ausgestaltungen des Erfindungsgegenstandes sind den weiteren abhängigen Ansprüchen zu entnehmen.

Anhand den in den Zeichnungen angegebenen Ausführungsbeispielen sollen die Erfindung, ihre Vorteile sowie weitere Verbesserungen der Erfindung näher erläutert und beschrieben werden.

Es zeigen:
- Fig. 1: eine Beispieltabelle mit einer Benutzungsverteilung von Roboterachsen,
- Fig. 2: einen Industrieroboter mit sechs Achsen,
- Fig. 3: eine Anordnung eines Industrieroboters und einem erfindungsgemäßen System,
- Fig. 4: ein Schema mit einer Datenstruktur der Anordnung von dem Industrieroboter mit dem erfindungsgemäßen System und
- Fig. 5: eine graphisch aufbereitete Darstellung der Benutzungsanteile von Roboterachsen.

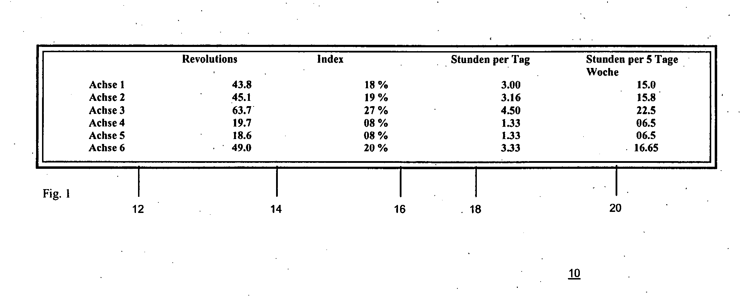

Fig. 1 zeigt eine Tabelle 10, die beispielhafte Daten für einen sechsachsigen Roboter enthält, die aus einem Produktionsprogramm stammen, welches eine Zykluszeit von 60 Sekunden aufweist sowie 1000 Zyklen je 24 Stunden arbeitet.

Eine erste Spalte 12 bezeichnet dabei die jeweiligen Roboterachsen 1 bis 6, wobei den betreffenden Achsen zeilenweise Werte zugeordnet sind. Eine zweite Spalte 14 gibt für jede Achse einen absoluten Wert für festgestellte Umdrehungen der jeweiligen Achse an, die innerhalb einer Zykluszeit des Produktionsprogrammes festgestellt wurden. In einer dritten Spalte 16 sind die Umdrehungswerte als indizierte Werte, hier als Prozentwerte entsprechend der anteilige Nutzung der jeweiligen Achsen an der Gesamtnutzung aufgetragen, wobei die Summe aller angegebenen Prozentwerte 100% ergibt. In einer vierten Spalte 18 sind die absoluten zeitlichen Werte der jeweiligen Achse innerhalb eines Tages notiert und schließlich sind in einer fünften Spalte 20 die absoluten Zeiten der Benutzung einer Achse während einer Arbeitswoche, hier einer Woche mit fünf Arbeitstagen mit einer entsprechenden Stundenzahl angegeben.

Mit der Tabelle 10 wird deutlich gemacht, dass aus den erfindungsgemäß benötigten Daten eines Bewegungsablaufes von Achsen eines Roboters zunächst die Drehbewegungen beziehungsweise deren Anteile der jeweiligen Achsen festgestellt werden. Der letzte Verfahrensschritt des erfindungsgemäßen Verfahrens, die Bewertung, ist dieser Tabelle 10 jedoch nicht entnehmbar. Aufgrund der in der dritten Spalte 16 gemachten Angabe des prozentualen Anteils an den Umdrehungen jeder Achse an einer Gesamtumdrehungszahl, ist es nunmehr auf verschiedene Arten möglich, eine Bewertung der festgestellten Drehbewegungen jeder Achse vorzunehmen.

Eine Möglichkeit besteht darin, die am meisten bewegte Achse, hier die Achse 3, im gewählten Beispiel als maßgebliche Achse festzulegen, so dass die Berechnung des Wartungsintervalls auf Grundlage des 27% Umdrehungsanteils an der Gesamtumdrehungszahl oder aufgrund der absoluten Umdrehungszahlen, nämlich hier 63,7 Umdrehungen für die Achse 3, erfolgt und auf diese Weise zusammen mit den historischen Daten, also den Daten, die angeben, wieviele Zyklen vom Roboter bereits geleistet wurden, im Vergleich zu der empfohlenen maximalen Umdrehungszahl zu sehen, die gemäß der Herstellerangaben für eine nächstfolgende Wartung, das Wartungsintervall als solches oder den verbleibenden Zeitraum bis zu einem nächsten Wartungszeitpunkt angeben.

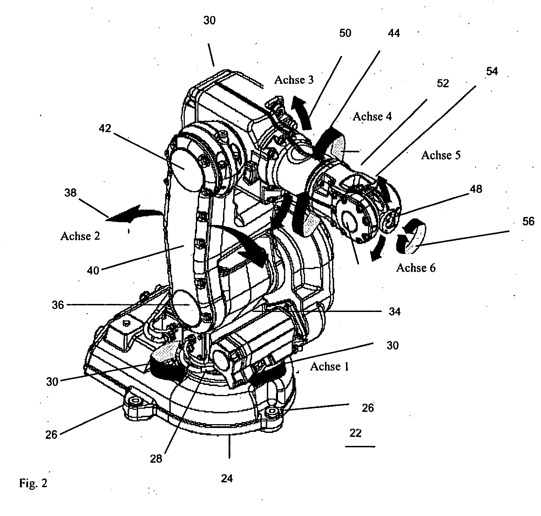

Fig. 2 zeigt das Beispiel eines sechsachsigen Roboters 22, der verschiedene Ausnehmungen 26 zur Befestigung eines Roboterfußes 24 auf einem in dieser Figur nicht dargestellten Fundament aufweist.

Mittels einer ersten Roboterachse 28 ist ein Roboterarm 30 in der durch die ersten Pfeile 32 angedeuteten Richtung beweglich. Der Roboterarm 30 wird bedarfsweise durch einen Motor mittels einem Getriebe um die erste Achse 28 gedreht. Die erste Achse 28 verbindet den Roboterfuß 24 mit einem erste Achsschenkel 34.

An einer zweiten Stelle ist der erste Achsschenkel 34 mit einer zweiten Roboterachse 36 verbunden, wobei diese den Roboterarm 30 in der durch die zweiten Pfeile 38 angegebenen Richtungen um die zweite Roboterachse 36 beweglich macht. Auch die zweite Roboterachse 36 wird durch einen Motor mittel eines Getriebe angetrieben, so dass eine Robotersteuerung auch diese Achse wunschgemäß auf eine vorbestimmte Position bewegen kann.

Ein zweiter Achsschenkel 40 ist an seinem einen Ende mit der zweiten Roboterachse 36 verbunden, während sein anderes Ende mit einer dritten Roboterachse 42 verbunden ist. Auch um die dritte Roboterachse 42 ist der freie Teil des Roboterarms 30 drehbar gelagert, wiederum mit einem vergleichbaren Aufbau, wie schon bei den Achsen zuvor beschrieben, jeweils mit einem Motor und einem Getriebe. Ein vergleichbarer Aufbau des Roboterarmes 30 ist auch für die vierte Roboterachse 44, der fünften Roboterachse 46 sowie der sechsten Roboterachse 48 verwirklicht, die jeweils die durch die dritten Pfeile 50, vierten Pfeile 52, fünften Pfeile 54 sowie sechste Pfeile 56 angedeuteten Freiheitsgrade für die Bewegung des Roboters 22 schaffen.

Betrachtet man die Längserstreckung des Roboterarmes 30 vom Roboterfuß 24 aus beginnend, ist festzustellen, dass sowohl die Achsschenkel 34, 40 und so weiter, als auch die Ausgestaltung der Roboterachsen 28, 36, 42, 44, 46 und 48, deren Motoren sowie deren Getriebe nach jedem Achsschenkel jeweils kleiner ausgelegt sind, bis zum freien Ende der Roboterarms 30, dessen letzte Roboterachse, die sechste Roboterachse 48, als der mechanisch schwächsten des gesamten Roboterarmes 30 ausgelegt ist. Dies ist eine übliche Auslegung eines derartigen Roboters 22, die darauf basiert, dass über die erste Roboterachse 28 die Summe aller Kräfte und Momente des gesamten Roboterarmes 30 in den Roboterfuß 24 abzutragen ist. Je nach Werkzeug, das am Roboter 22 angebracht wird, kommen weitere Kräfte, die durch die Bearbeitung von Werkstücken mit dem Werkzeug vorgenommen werden, hinzu. Ein derartiges Werkzeug ist in dieser Figur nicht dargestellt, würde sich jedoch am äußersten Ende des freien Endes des Roboterarmes 30 befinden.

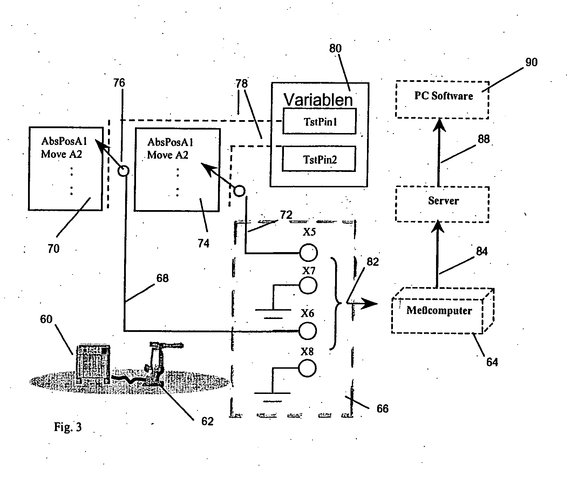

Fig. 3 zeigt das Beispiel einer Schnittstelle zwischen einer Robotersteuerung 60, der einen Roboter 62 steuert, und einem ersten System zur Ermittlung eines Wartungsbedarfes 64. Eine Schnittstelle 66 zwischen der Robotersteuerung 60 und dem ersten System 64 ist mit einem gestrichelten Rahmen umrandet und umfasst eine Anzahl von Schnittstellenpunkten, die mit X5, X6, X7 sowie X8 bezeichnet sind. Die Schnittstelle 66 ist dabei für das Abgreifen von zwei Signalen einer Roboterachse vorgesehen, wobei es ohne weiteres denkbar, dass eine unbeschränkte Anzahl von Signalen und Achsen über die Schnittstelle abgefragt werden.

Im gewählten Beispiel ist die Seite der Schnittstelle 66, auf der sich der Roboter 62 sowie dessen Steuerung 60 befindet, durch die Darstellung der Symbole für einen Roboter 62 und dessen Robotersteuerung 60 dargestellt. Auf dieser Seite der Schnittstelle 66 verbindet den Anschlusspunkt X6 eine erste Datenleitung 68 mit einem ersten Datenauswahlschalter 70 der Robotersteuerung 60. In vergleichbarer Weise ist der Anschlusspunkt X5 mit einer zweiten Datenleitung 72 mit einem zweiten Datenauswahlschalter 74 verbunden. Über ein Schaltelement 76 kann die erste Datenleitung 68 entweder mit einem Signal A1 einer absoluten Position einer ersten Roboterachse oder einem Bewegungssignal A2 der ersten Achse geschaltet werden. Im gewählten Beispiel verbindet das Schaltelement 76 die Datenleitung 68 mit dem Signal A1 der absoluten Position der ersten Achse.

Im Unterschied dazu, ist die zweite Datenleitung 72 mit dem Bewegungssignal A2 für eine erste Achse des Roboters 62 verbunden.

Das gewählte Beispiel zeigt also die Beschaltung der Schnittstelle 66 mit Daten aus der Robotersteuerung 60, die lediglich eine Achse betreffen. Es ist ohne weitere denkbar, dass die Daten mehrerer oder aller Achsen des Roboters 62 auf eine entsprechende Schnittstelle aufgelegt werden. Ein Vorteil dieser Beschaltung ist es, dass im Vergleich zur absoluten Position der Achse, die die Stellung im aktuellen Programm, welches der Roboter 62 abzuarbeiten hat, darstellt, ein entsprechender Bewegungswert jeweils zugeordnet werden kann.

Zu Testzwecken, ob die zur Verfügung gestellten Signale auch fehlerfrei an die Schnittstelle 66 übermittelt werden, sind der erste 70 sowie der zweite Datenauswahlschalter 74 jeweils mit einer Testvorrichtung mittels der dritten Datenleitungen 78 verbunden.

Die Schnittstelle 66 ist außerdem noch mit dem Messcomputer 64 verbunden, dass durch einen ersten Pfeil 82 angedeutet ist. Zudem ist der Messcomputer 82 durch eine vierte Datenleitung 84 mit einem Server 36 sowie dieser mit einer fünften Datenleitung 88 mit einem PC 90 verbunden. Im dargestellten Beispiel hat der Messcomputer 64 die Aufgabe die an der Schnittstelle 66 analog zur Verfügung gestellten Werte der Roboterachse als Werte für einen Bewegungsverlauf zu interpretieren. Die durch den Messcomputer 64 aufbereiteten Werte für den Bewegungsverlauf werden durch die vierte Datenleitung 84, den Server 86 sowie die fünfte Datenleitung 88 zum PC 90 übermittelt.

Mit der in dieser Figur dargestellten Anordnung läuft das erfindungsgemäße Verfahren wie folgt ab. Von der Robotersteuerung 60 werden am Anschlusspunkt X6 über die erste Datenleitung 68 Datensignale zur Verfügung gestellt, die als absolute Position der ersten Achse A1 zu bewerten sind. In vergleichbarer Weise werden von der Robotersteuerung 60 über die zweite Datenleitung 72 ein Wert für die gerade ausgeführte Bewegung der ersten Achse des Roboters 62 angelegt ist. Beide Werte werden zusammen mit einem Zeitsignal vom Messcomputer 64 erfasst und zunächst gespeichert. Der Signalwert für die absolute Position der ersten Achse des Roboters 62 ist für das erfindungsgemäße Verfahren nicht zwingend erforderlich, vereinfacht jedoch für zweckmäßige Ausgestaltung des erfindungsgemäßen Verfahrens die Interpretation der Messwerte für die Bewegung.

Ebenso wenig ist es erforderlich, dass der Messcomputer 64 die empfangenen Daten speichert. Diese könnten auch sofort, also online weiter verarbeitet und an den PC 90 übertragen werden. Aber auch hier ist es zweckmäßig, die erhaltenen Messwerte zu Vergleichszwecken oderfür spätere Vergleichsrechnungen zunächst zu speichern, um zudem auch eine Kopie der Originaldaten zur Verfügung zu haben.

Auf diese Weise wird der gesamte Bewegungsverlauf eines kompletten Arbeitszyklus des Roboters 62 an den PC 90 übermittelt. Auch dieser speichert zunächst den empfangenen Bewegungsverlauf der ersten Achse ab. Im gewählten Beispiel soll der Arbeitszyklus des Roboters 62 im ersten Schritt aus dem Anfahren und Greifen eines Werkstückes bestehen. Der zweite Arbeitsschritt ist das Anheben des Werkstücks mit anschließendem Verbringen desselben an eine Endposition für das Werkstück. Schließlich besteht der dritte Arbeitsschritt für den Roboter 62 darin, das Werkstück loszulassen und den Roboterarm wieder in seine Ausgangsposition zu bewegen, so dass der nunmehr beendete Arbeitszyklus wiederholt werden könnte.

Der durch die Arbeitsschnitte definierte Arbeitszyklus wird zunächst als Bewegungsverlauf auf der Anzeigevorrichtung des PCs 90 dargestellt. Jede Bewegung beziehungsweise jeder Bewegungsanteil der Achse, werden als solche detektiert, analysiert und gezählt, sowie in einem anschließenden Verfahrensschritt einer Bewertung unterzogen.

In einem möglichen Bewertungsschritt wird dabei die Summen der Bewegungsanteile je Achse innerhalb einer bestimmten Zeit, vorgegeben durch den Arbeitszyklus, als Maßstab für die Bewertung gebildet werden.

Eine andere Möglichkeit besteht darin, dass die Zeitanteile der Bewegungen einzelner Achsen prozentual zu einer Gesamtbewegungszeit aller Achsen (=100%) herangezogen wird. Insgesamt wird daraus gegebenenfalls zusätzlich mit einem empirisch ermittelten Faktor versehen, der aktuelle Wartungsbedarf aufgrund eines solchen Arbeitszyklus abgeschätzt.

Die einfachste mit dem erfindungsgemäßen Verfahren abschätzbaren Wartungsbedarf ist also ein Bedarf aufgrund eines Arbeitszyklus. Mit der Kenntnis der bisher vollbrachten Arbeitszyklusse des Roboters 62 wird erfindungsgemäß dann auch den aktuellen Wartungszustand des Roboters 62 beziehungsweise der betreffenden ersten Achse geschlossen werden. Aufgrund dieser Abschätzung wird dann zudem noch eine Aussage ermöglicht, die sich auf den Zeitraum bezieht, mit dem diese Roboterachse noch bei dem momentan definierten Arbeitszyklus betrieben werden kann.

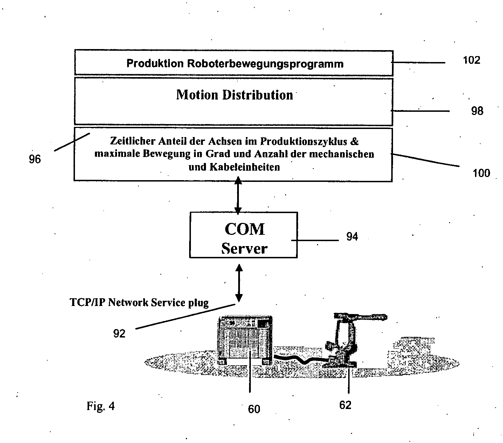

Fig. 4 zeigt das Beispiel eines Datenflusses von der Robotersteuerung 60 des Roboters 62 über eine TCP/IP-Schnittstelle 92, durch welche die Daten von der Robotersteuerung 60 an ein TCP/IP-Netzwerk 94 einspeisbar sind. Ein TCP/IP-Netzwerk 94 verbindet also ein Auswertegerät 96 mit der Robotersteuerung 60. Dieses Beispiel zeigt, dass das Auswertegerät 96 ortsunabhängig von der Robotersteuerung 60 mittels des Netzwerkes 94 verbunden sein kann. Im gewählten Beispiel ist das ein TCP/IP-Netzwerk 94. Es ist aber ebenso gut denkbar, dass die Schnittstelle 92 in andere Netzwerke einbindet, beispielsweise dass die Schnittstelle 92 eine Internetschnittstelle ist, so dass das Netzwerk 94 durch das Internet gebildet ist, und das Auswertegerät 96 somit ohne lokale Beschränkung irgendwo auf der Welt stehen kann.

Im gewählten Beispiel ist das erfindungsgemäße System zur Ermittlung eines Wartungsbedarfes von Achsen eines Roboterarmes eines Industrieroboters mit allen seinen Modulen im Auswertegerät 96 verwirklicht. Der Bewegungsverlauf wird demgemäss von der Schnittstelle 92 über das Netzwerk 94 in Form der der Robotersteuerung 60 zur Verfügung gestellten Daten zum Auswertegerät 96 geleitet. Dort werden die erhaltenen Daten zunächst von einem Datensammler 98 empfangen und als Bewegungsdaten oder als sonstige Daten, wie zum Beispiel maximale Bewegung der Achsen in Grad, Anzahl der mechanischen Bewegungen oder Anzahl von Kabeleinheiten beziehungsweise eines Bewertungsgröße für bewegte Kabel, insbesondere auch in ihrem zeitlichem Zusammenhang, festgehalten und gegebenenfalls gespeichert. Auf diese Weise ist einem Bearbeitungsmodul 100 möglich, die vom Datensammler 98 zur Verfügung gestellten Daten als Bewegungsanteile einzelner Achsen für einen Vergleich dieser Anteile, für die Maximalwerterkennung und für die Darstellung der Daten als Kurven und so weiter, zu interpretieren. In einem weiteren Modul, einem Bewertungsmodul 102 werden die Werte, die Bewegungsanteile oder bestimmte Aspekte derselben bewertet als Wartungsbedarf, so dass am Ende des erfindungsgemäßen Verfahrens eine Aussage darüber getroffen werden kann, inwieweit eine bestimmte Achse des Roboters 62 aufgrund besonders häufiger Bewegungen oder entsprechend geringer Bewegungsanteile welche individuellen Wartungsbedarf aufweist. Diese Daten zusammen mit anderen Daten der Produktion, der Wartung oder des Roboterbewegungsprogramms, wie in dieser Figur im Bewertungsmodul 102 angedeutet, verbessern insgesamt die Qualität der Aussage betreffend der Ermittlung des Wartungsbedarfes beziehungsweise des Wartungsbedarfes einzelner Achsen.

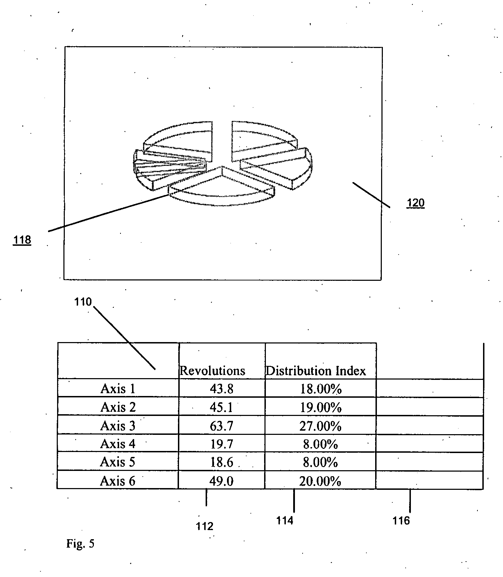

Fig. 5 zeigt anhand des Zahlenbeispiels aus der Figur 1 eine graphische Aufbereitung der Daten gemäß der Tabelle 60. Hierzu ist in dieser Figur eine zweite Tabelle 110 gezeigt, deren erste Tabellenspalte 112 die gleichen Angaben wie die erste Spalte 12 enthält. Entsprechendes gilt für die zweite Tabellenspalte 114 und die dritte Tabellenspalte 116, wobei deren Inhalt denen der zweiten Spalte 14 sowie der dritten Spalte 16 entspricht. Oberhalb der zweiten Tabelle 110 ist der Inhalt dieser Tabelle in einer kuchenförmigen Grafik 118 aufbereitet und mit einem Index 120 versehen, der die beispielsweise farbig dargestellten Segmente der Kuchengrafik 118 mit einem Achsennamen kennzeichnet.

Zur Verdeutlichung des erfindungsgemäßen Verfahrens soll noch folgendes Beispiel dienen. Die Daten eines Bewegungsablaufs einer Roboterachse werden von einer Datenaufnahmeeinheit, zum Beispiel ein Messcomputer, aufgenommen. Dazu wird dieser an eine geeignete Schnittstelle am Roboter oder an der Robotersteuerung angeschlossen. Nun werden die Daten über die Bewegungsabläufe der verschiedenen Roboterachsen während des Produktionsprogramms für diesen Roboter aufgenommen und gespeichert. Die Auswertung der gewonnen Daten erfolgt durch die Analyse des zeitlichen Anteils der Motorumdrehungen beziehungsweise entsprechende Anteile der Achsen, entsprechend den aufgezeichneten Werten und der Analyse beziehungsweise dem Erkennen von besonderen Belastungen einzelner Achsen und Angabe der maximal erreichten Werte. Aufgrund der erfindungsgemäßen Bewertung dieser Daten werden vorbeugende Maßnahmen oder Instandhaltungsvorschläge für die einzelnen Achsen ermöglicht. Durch das Erkennen von besonderen Belastungen sind Vorschläge zu deren Vermeidung ermöglicht, zum Beispiel ein Vorschlag von alternativen Bewegungen der Roboterbewegungsabläufen, welche die jeweiligen besonderen Belastungen entsprechend des Produktionsprogramms reduziert. So ist auch eine nutzungsbasierte Schmierprozedur für jede Achse festlegbar.

Das erfindungsgemäße Verfahren kann noch weiter verbessert werden, indem die gewonnen Werte mit anderen Messungen, wie zum Beispiel Getriebespiel, Leistung, Arbeit oder maximales Drehmoment im Produktionszyklus eines Industrieroboters durchgeführt werden. Auf diese Weise lassen sich die Ursachen der Achsbelastung entsprechend genauer bestimmen sowie die Wirkungen auf den Verschleiß und Festlegung eines Wartungsintervalls entsprechend genau bestimmen.

Im vorstehend genannten Beispiel wird die Auswertung nach Anzahl der Motorumdrehungen im zeitlichen Verhältnis zum aktuellen Produktionsprogramm erfolgen. Die Bewertungsangabe erfolgt in Prozent. Auf dieser Basis wird die nutzungsbasierte Schmierprozedur der Achsen als Wartungsintervall in Abhängigkeit der Nutzung je Zeiteinheit, zum Beispiel Tag, Woche, Monat, Jahr in der Einheit "Stunden" berechnet. Mit der Berücksichtigung von achsspezifischen Parametern, wie zum Beispiel die Verwendung eines Getriebefaktors, der ein empirisch ermittelter Wert ist, wird die maximal zulässige Bewegung einer Achse bestimmt.

### Bezugszeichenliste

- 10: Tabelle
- 12: erste Spalte
- 14: zweite Spalte
- 16: dritte Spalte
- 18: vierte Spalte
- 20: fünfte Spalte
- 22: Roboter
- 24: Roboterfuß
- 26: Ausnehmung
- 28: erste Roboterachse
- 30: Roboterarm
- 32: erste Pfeile
- 34: erster Achsschenkel
- 36: zweite Roboterachsen
- 38: zweiter Pfeil
- 40: zweiter Achsschenkel
- 42: dritte Roboterachsen
- 44: vierte Roboterachsen
- 46: fünfte Roboterachsen
- 48: sechste Roboterachsen
- 50: dritte Pfeile
- 52: vierte Pfeile
- 54: fünfte Pfeile
- 56: sechste Pfeile
- 60: Robotersteuerung
- 62: Roboter
- 64: Wartungsbedarf
- 66: Schnittstelle
- 68: erste Datenleitung
- 70: erster Datenauswahlschalter
- 72: zweite Datenleitung
- 74: zweiter Datenauswahlschalter
- 76: Schaltelement
- 78: dritte Datenleitung
- 80: Testvorrichtung
- 82: Messcomputer
- 84: vierte Datenleitung
- 86: Server
- 88: fünfte Datenleitung
- 90: PC
- 92: Schnittstelle
- 94: Netzwerk
- 96: Auswertegerät
- 98: Datensammler
- 110: zweite Tabelle
- 112: erste Tabellenspalte
- 114: zweite Tabellenspalte
- 116: dritte Tabellenspalte
- 118: Graphik
- 120: Index

## Patentansprüche

1. Verfahren zur Ermittlung eines Wartungsbedarfes von Achsen eines Roboterarmes eines Industrieroboters, wobei die Daten eines Bewegungsablaufes an wenigstens einer Achse während wenigstens eines Arbeitszyklus des Industrieroboters zur Verfügung gestellt werden, wobei die Drehbewegungen der wenigstens einen Achse anhand der Daten festgestellt werden, und wobei durch eine Bewertung der festgestellten Drehbewegungen ein Wartungsintervall für die wenigstens eine Achse ermittelt wird.

2. Verfahren nach Anspruch 1, **dadurch gekennzeichnet, dass** die Daten des Bewegungsablaufes gemessen oder aus einem Datenspeicher ausgelesen werden.

3. Verfahren nach Anspruch 1 oder 2, **dadurch gekennzeichnet, dass** die Bewertung nach Zeitanteilen einer Drehbewegung oder nach Anzahl der Umdrehungen durchgeführt wird.

4. Verfahren nach einem der vorgenannten Ansprüche, **dadurch gekennzeichnet, dass** der Bewegungsabläufe aller Achsen zur Ermittlung herangezogen wird, und dass durch die Bewertung derjenigen Achse, welche die absolut oder relativ höchste Bewertung aufweist, ein gemeinsames Wartungsintervall für alle Achsen ermittelt wird.

5. Verfahren nach einem der vorgenannten Ansprüche, **dadurch gekennzeichnet, dass** die Bewegungsabläufe oder / und die absolute oder / und die relative Bewertung auf einer Anzeigevorrichtung dargestellt werden.

6. Verfahren nach einem der vorgenannten Ansprüche, **dadurch gekennzeichnet, dass** unter Berücksichtigung des ermittelten Wartungsintervalls zusammen mit der bisherigen Anzahl der Arbeitszyklen ein Wartungszeitpunkt für die betreffende Achse oder ein gemeinsamer Wartungszeitpunkt für alle Achsen bestimmt wird.

7. Verfahren nach einem der vorgenannten Ansprüche, **dadurch gekennzeichnet, dass** achsspezifische Parameter, insbesondere die Motorenbauart eines Antriebsmotors einer Achse, die Motorengröße eines Antriebsmotors einer Achse, das Getriebe einer Achse, das Getriebespiel, die Leistung oder Arbeit oder maximales Drehmoment im Produktionszyklus, für die Ermittlung des Wartungszeitpunktes oder - raumes herangezogen werden.

8. Verfahren nach Anspruch 7, **dadurch gekennzeichnet, dass** ein achsspezifischer Parameter empirisch oder mit einem neuronalen Verfahren ermittelt wird.

9. System zur Ermittlung eines Wartungsbedarfes von Achsen eines Roboterarmes eines Industrieroboters mit einem Datenmodul, welches die Daten eines Bewegungsablaufes wenigstens einer Achse während wenigstens eines Arbeitszyklus des Industrieroboters enthält, mit einem Analysemodul, mit welchem aus den Daten Drehbewegungen der wenigstens einen Achse analysierbar sind, und mit einem Bewertungsmodul, durch welches mittels einer Bewertung der festgestellten Drehbewegungen die Festlegung eines Wartungsintervalls für die wenigstens eine Achse ermöglicht ist.

10. System nach Anspruch 9, **dadurch gekennzeichnet, dass** wenigstens eines der Module, nämlich das Datenmodul, das Analysemodul oder das Bewertungsmodul, in einer Robotersteuerung angeordnet ist.

11. System nach Anspruch 9 oder 10, **dadurch gekennzeichnet, dass** wenigstens eines der Module, nämlich das Datenmodul, das Analysemodul oder das Bewertungsmodul, in einem Auswertegerät angeordnet ist, wobei das Auswertgerät gegebenenfalls mit der Robotersteuerung verbunden ist.

12. System nach einem der vorgenannten Ansprüche 9 bis 11, **dadurch gekennzeichnet, daß** der Bewegungsablauf aus der Robotersteuerung als direkte oder indirekte Werte auslesbar sind.

13. System nach einem der vorgenannten Ansprüche 9 bis 12, **dadurch gekennzeichnet, dass** die Module jeweils Computerprogrammprodukte sind.
